# EUROPÄISCHE PATENTSCHRIFT

(11) **EP 3 652 105 B1**
(45) Veröffentlichungstag und Bekanntmachung des Hinweises auf die Patenterteilung: **22.05.2024**
(21) Anmeldenummer: 18743723.1
(22) Anmeldetag: 13.07.2018
(51) Int. Cl.: B67C 3/22, F16C 17/24, F16C 19/52

(54) **VORRICHTUNG ZUM BEHANDELN EINES BEHÄLTERS IN EINER FÜLLPRODUKTABFÜLLANLAGE**
DEVICE FOR TREATING A CONTAINER IN A FILL-PRODUCT FILLING PLANT
DISPOSITIF DE TRAITEMENT D'UN RÉCIPIENT DANS UNE INSTALLATION DE REMPLISSAGE PAR UN PRODUIT DE REMPLISSAGE

(30) Priorität: 14.07.2017 DE 102017115915
(43) Veröffentlichungstag der Anmeldung: 20.05.2020
(73) Patentinhaber: Krones AG, 93073 Neutraubling (DE)
(72) Erfinder: BERNER, Ludwig, 93073 Neutraubling (DE); KNIELING, Erwin, 93073 Neutraubling (DE); KURSAWE, Andreas, 93073 Neutraubling (DE); BRAUN, Franz, 93073 Neutraubling (DE)
(74) Vertreter: Nordmeyer, Philipp Werner
(86) Internationale Anmeldenummer: PCT/EP2018/069103
(87) Internationale Veröffentlichungsnummer: WO 2019/012116

(56) Entgegenhaltungen:
- EP-A1- 2 070 865
- WO-A1-2013/160053
- WO-A1-2016/019431
- JP-A- H03 163 214
- JP-A- S63 203 814
- US-A- 5 315 954

## Beschreibung

### Technisches Gebiet

Die vorliegende Erfindung betrifft eine Vorrichtung zum Behandeln eines Behälters in einer Füllproduktabfüllanlage, insbesondere in einer Getränkeabfüllanlage.

### Technischer Hintergrund

In Vorrichtungen zum Behandeln von Behältern in Füllproduktabfüllanlagen, welche ein Behandlungskarussell zur Behandlung der zu befüllenden Behälter umfassen, ist es bekannt, Medien mittels eines sogenannten Drehverteilers von einem stehenden Anlagenteil auf das sich relativ dazu drehende Behandlungskarussell zu übergeben.

Als Vorrichtungen zum Behandeln von Behältern sind beispielsweise Blasmaschinen bekannt, mittels welchen der eigentlich zu befüllende Behälter aus einem Behälterrohling, auch als Preform bezeichnet, durch Blasen oder Streckblasen hergestellt wird. Weiterhin sind Injektoren bekannt, mittels welchen Desinfektions- beziehungsweise Sterilisationsmedien in den Innenraum des jeweils zu befüllenden Behälters eingebracht werden können. Es sind Rinser bekannt, mittels welchen der Behälterinnenraum von zu befüllenden Behältern ausgespült werden kann. Weiterhin sind Füller zum eigentlichen Befüllen des zu befüllenden Behälters mit dem Füllprodukt bekannt sowie Verschließer, mittels welchen der mit dem Füllprodukt befüllte Behälter verschlossen wird durch das Aufbringen eines Behälterverschlusses. Sämtlichen dieser Vorrichtungen ist gemein, dass die Behandlungsorgane, mittels derer auf den zu befüllenden Behälter eingewirkt wird, üblicher Weise in Behandlungskarussells angeordnet sind, um entsprechend eine kontinuierliche Produktion der mit dem Füllprodukt befüllten Behälter zu ermöglichen. Alle Behandlungsorgane benötigen die Übergabe von Medien von einem stehenden Anlagenteil auf das Behandlungskarussell.

Mittels der vorgesehenen Drehverteiler können dann die benötigten Medien von dem stehenden Anlagenteil auf das rotierende Behandlungskarussell übergeben werden, wobei die Medien beispielsweise Reinigungsmedien, Arbeitsluft, Gase, Füllprodukt etc. sein können.

Unterschiedliche Ausbildungen von Drehverteilern sind bekannt. Den Drehverteilern ist jedoch gemein, dass die Verteilung von Medien über entweder im stehenden oder im drehenden Teil des Drehverteilers vorgesehene Medienspuren, die beispielsweise in Form einer vertieften Nut im stehenden und/oder drehenden Teil angeordnet sein können, bereitgestellt werden, wobei das entsprechende Medium über eine Verrohrung von dem stehenden Anlagenteil zur Verteilerspur geführt wird, und dann im drehenden Teil, also dem Behandlungskarussell, ebenfalls über eine Verrohrung von der Verteilerspur abgegriffen wird. Auf diese Weise kann ein Medium von einem stehenden Anlagenteil auf ein drehendes Anlagenteil übergeben werden. Die einzelnen Verteilerspuren werden über entsprechende Dichtungen gegenüber der Umgebung und voneinander fluiddicht abgeschlossen.

Weiterhin ist es bekannt, Strom und Steuersignale über Schleifverteiler von dem stehenden auf den drehenden Teil zu übergeben. Auch hier kann eine Verteilerspur entweder am drehenden oder am stehenden Teil des Drehverteilers vorgesehen sein und dann entsprechend ein Abgriff an dem anderen Teil des Drehverteilers vorgesehen sein.

Der drehende und der stehende Teil des Drehverteilers sind üblicherweise über mindestens ein Lager, welche sowohl als Radiallager als auch als Axiallager ausgebildet sein kann, miteinander gekoppelt.

Im Betrieb der Vorrichtung zur Behandlung des Behälters ergibt sich zunächst aufgrund der Relativbewegung des drehenden Teils relativ zum stehenden Teil ein üblicher Anlagenverschleiß, der sich insbesondere im Bereich der Lager manifestiert. Dies ist insbesondere der Fall, da relativ große Massen gegeneinander bewegt werden.

Eine besondere Herausforderung im Bereich der Füllproduktabfüllanlagen ergibt sich jedoch daraus, dass die Anlage bei stark unterschiedlichen Temperaturen betrieben wird. Insbesondere ist es bekannt, bei der aseptischen Abfüllung von Füllprodukten die Füllprodukte möglichst kalt abzufüllen - man spricht hier von einer kalt-aseptischen Abfüllung. Das Füllprodukt wird hier bei Temperaturen von ca. 4°C abgefüllt. Weiterhin ist es bekannt, Füllproduktabfüllanlagen mit hohen Temperaturen zu reinigen, zu desinfizieren und zu sterilisieren. Insbesondere ist es hier bekannt, Reinigungsmedien mit Temperaturen zwischen 60°C und 80°C zu verwenden, um ein Abspülen der Füllproduktreste sowie der gesamten Vorrichtung durchzuführen. Nach einem solchen Reinigungsschritt ist es bekannt, eine Anlage mit Heißdampf zu behandeln, um eine Sterilisierung der füllproduktführenden und füllproduktberührten Oberflächen zu erreichen. Hier können je nach Druck des Dampfes Temperaturen zwischen 95°C und 130°C erreicht werden. Entsprechend unterliegt die Anlage im Normalbetrieb sowie im Reinigungs- und Sterilisationsbetrieb hohen Temperaturschwankungen, welche entsprechend die Belastung der Lager aufgrund der Materialausdehnung erhöhen. Es kommt daher immer wieder zu Beschädigungen, Defekten oder Ausfällen am Drehverteiler, welche zu Ausfällen der gesamten Behälterbehandlungsvorrichtung führen können.

Die EP 2 070 865 A1 beschreibt einen Drehverteiler mit Leckageerkennung und offenbart eine Vorrichtung und ein Verfahren zum Behandeln eines Behälters in einer Füllproduktabfüllanlage gemäß dem Oberbegriff des Anspruchs 1 bzw. 14. Die WO 2013/160053 A1 beschreibt ein Verfahren und ein System zur Überwachung eines Lagers.

### Darstellung der Erfindung

Es ist entsprechend eine Aufgabe der vorliegenden Erfindung, einen langfristig sicheren Betrieb einer Vorrichtung zum Behandeln von Behältern anzugeben.

Diese Aufgabe wird durch eine Vorrichtung zum Behandeln von Behältern in einer Füllproduktabfüllanlage mit den Merkmalen des Anspruchs 1 gelöst. Vorteilhafte Weiterbildungen ergeben sich aus den Unteransprüchen, den Figuren sowie der vorliegenden Beschreibung.

Entsprechend wird eine Vorrichtung zum Behandeln eines Behälters in einer Füllproduktabfüllanlage vorgeschlagen, bevorzugt zum Befüllen eines Behälters mit einem Füllprodukt in einer Füllproduktabfüllanlage, umfassend ein relativ zu einem stehenden Anlagenteil drehbares Behandlungskarussell und einen Drehverteiler zur Übergabe eines Mediums von dem stehenden Anlagenteil auf das Behandlungskarussell. Erfindungsgemäß ist eine Überwachungsvorrichtung vorgesehen, die zur Überwachung der mechanischen Integrität des Drehverteilers bei drehendem Behandlungskarussell eingerichtet ist.

Dadurch, dass eine Überwachungsvorrichtung zur Überwachung der mechanischen Integrität des Drehverteilers im Behandlungsbetrieb vorgesehen ist, wird es ermöglicht, im laufenden Betrieb stets eine Überwachung des Drehverteilers durchzuführen, um auf diese Weise feststellen zu können, ob aufgrund eines Defekts oder erhöhten Verschleißes der Ausfall des Drehverteilers bevorzustehen droht.

Es kann auf diese Weise erreicht werden, dass rechtzeitig Maßnahmen ergriffen werden, um den Betrieb des Drehverteilers weiterhin aufrechtzuerhalten. Beispielsweise können Wartungsmaßnahmen für den Drehverteiler und insbesondere für die Lager und Dichtungen des Drehverteilers besser geplant werden, da sie direkt an das Verschleißverhalten des Drehverteilers angepasst werden können.

Beispielsweise kann über die Überwachungsvorrichtung festgestellt werden, ob sich das Lagerspiel oder die Abnutzung eines Lagers des Drehverteilers noch im akzeptablen Bereich befindet, oder aber den akzeptablen Bereich verlässt, so dass entsprechend eine Wartung beziehungsweise ein Austausch des beziehungsweise der Lager erforderlich erscheint.

Der drehende Teil und der stehende Teil des Drehverteilers sind bevorzugt über ein Lager, besonders bevorzugt jedoch über mindestens zwei Lager, drehbar miteinander gekoppelt. Das oder die Lager ist/sind bevorzugt als Radiallager und/oder als Axiallager ausgebildet. Auch eine Kombination mindestens eines Radiallagers mit mindestens einem Axiallager kann zu einer vorteilhaften Kopplung des drehenden Teils an den stehenden Teil führen.

Die Überwachungsvorrichtung kann an einem, mehreren oder allen der vorliegenden Lager vorgesehen sein, um eine Überwachung der mechanischen Integrität zu erreichen.

Die Überwachungsvorrichtung kann dazu eingerichtet sein, dass das von einem drehenden Teil des Drehverteilers auf einen stehenden Teil des Drehverteilers übertragene Drehmoment bestimmt wird und darüber die mechanische Integrität des Drehverteilers überwacht wird. Durch die Überwachung des Drehmoments, insbesondere auch beim Anfahren beziehungsweise Abfahren des Behandlungskarussells, kann die Integrität des Drehverteilers und insbesondere die Integrität der Lager und Dichtungen bestimmt werden.

Verändert sich beispielsweise über die Zeit hinweg das von dem stehenden Teil auf den drehenden Teil übertragene Drehmoment - beispielsweise in Form einer Erhöhung oder Verringerung des Drehmoments, so kann von einem erhöhten Verschleiß oder anderen mechanischen Problemen innerhalb des Drehverteilers ausgegangen werden. Neben dem Verschleiß beziehungsweise einer Erhöhung der Reibung innerhalb der Dichtungen und der Lager kann es auch zu einer Verschiebung beziehungsweise Biegung der Achse des Drehverteilers kommen, derart, dass eine Schiefstellung des drehenden Teils relativ zum stehenden Teil erreicht wird, welche ebenfalls zu mechanischen Ausfällen des Drehverteilers führen kann.

Über die Betrachtung des Drehmoments kann entsprechend auch die Kraft, welche von dem drehenden auf das stehende Teil übertragen wird, bestimmt werden und durch das Definieren bestimmter Grenzen eine Zerstörung beziehungsweise ein mechanischer Schaden innerhalb des Drehverteilers vermieden werden.

Weiterhin ist es möglich, durch eine drehwinkelgenaue Bestimmung des Drehmoments beim Umlauf des Behandlungskarussells eine Lokalisierung eines etwaigen Lagerschadens beziehungsweise auch eine Lokalisierung einer Schiefstellung der Achse des feststehenden Teils relativ zur Achse des drehenden Teils des Drehverteilers zu erreichen.

Weiterhin kann aus der Analyse des Drehmomentverhaltens auch auf die Art des vorliegenden Defekts beziehungsweise Verschleißes geschlossen werden, beispielsweise eine Abnutzung der Wälzkörper der Lager beziehungsweise eine Abnutzung des Lagerkäfigs beziehungsweise eine Abnutzung von Dichtungen des Drehverteilers.

Bevorzugt umfasst die Überwachungsvorrichtung eine Auswertungsvorrichtung, mittels welcher ein von der Überwachungsvorrichtung ermittelter Parameter ausgewertet wird, bevorzugt bezüglich eines vorgegebenen Grenzwerts für den Parameter oder bezüglich eines Verhaltens des Parameters im Zeitverlauf. Damit kann eine automatisierte Überwachung erreicht werden und eine Analyse auch über einen längeren Zeitverlauf hinweg kann erreicht werden.

Gemäß der Erfindung ist ein stehender Teil des Drehverteilers über eine Kompensationsverrohrung elastisch mit dem stehenden Anlagenteil verbunden, bevorzugt über eine Anbindung mittels eines Elastomers. Damit kann eine zuverlässige und sensible Messung des von dem stehenden Teil auf den drehenden Teil übertragenen Drehmoments - welches natürlich dem von dem drehenden Teil auf das stehende Teil übertragenen Drehmoment entspricht - durchgeführt werden.

Besonders bevorzugt ist dabei ein Sensor vorgesehen, der dazu eingerichtet ist, eine Bewegung des stehenden Teils des Drehverteilers bezüglich des stehenden Anlagenteils zu ermitteln, wobei der Sensor bevorzugt ein Kraftaufnehmer, ein Beschleunigungsaufnehmer oder ein Wegsensor ist.

Auf diese Weise kann aus der Kraft, der Beschleunigung oder der Auslenkung beispielsweise ein Maß für das zwischen dem stehenden Teil und dem drehenden Teil aufgebrachte Drehmoment erhalten werden.

Ein besonders elastischer Aufbau mit einer weitgehend definierten Elastizität ergibt sich mit einer Kompensationsverrohrung, die einen elastischen Kompensator aufweist, der bevorzugt eine elastische Schelle umfasst. Damit lässt sich durch die Auswahl des Materials und der Ausbildung des elastischen Kompensators ein besonders sensibler Aufbau der Überwachungsvorrichtung erreichen, mittels dessen entsprechend ein feinfühliges Überwachen der Verhaltens des Drehverteilers erreicht werden kann.

Bevorzugt weist die Kompensationsverrohrung wenigstens zwei unter einem Winkel zueinander angeordnete Rohrabschnitte auf, welche relativ zueinander bewegbar sind und bevorzugt über einen rotierbaren Flansch aneinander angebunden sind. Durch die auf diese Weise ausgebildete Kompensationsverrohrung kann auch eine elastische Anbindung des stehenden Teils des Drehverteilers erreicht werden, die aber gleichzeitig dauerhaltbar ist.

In einer weiteren bevorzugten Ausführung ist ein stehender Teil des Drehverteilers mit dem stehenden Anlagenteil über eine Drehmomentstütze verbunden und die Überwachungsvorrichtung überwacht eine Bewegung des stehenden Teils des Drehverteilers gegenüber der Drehmomentstütze. Damit kann ein besonders effizienter Aufbau erreicht werden.

Bevorzugt ist eine Ausfertigungsvorrichtung vorgesehen, welche das von der Überwachungsvorrichtrung bestimmte Verhalten, beispielsweise das gemessene Drehmoment, auswertet und beim Vorliegen einer vorgegebenen Alarmbedingung entsprechend entweder zur Verhinderung eines Anlagenschadens einen Notstopp einleitet, oder aber die Durchführung einer Wartung beziehungsweise Reparatur auslöst.

Die Überwachungsvorrichtung kann weiterhin bevorzugt einen Temperatursensor zur Überwachung der Temperatur eines Lagers des Drehverteilers umfassen. Besonders bevorzugt weist der Drehverteiler mindestens zwei Lager auf und an mindestens zwei Lagern oder an allen Lagern ist jeweils ein Temperatursensor vorgesehen.

Damit kann die jeweils im Lager durch die Lagerreibung erzeugte Temperatur jedes Lagers bestimmt werden. Über eine entsprechende Auswertung kann anhand des Temperaturverhaltens des Lagers im Betrieb und über den Zeitverlauf hinweg der Zustand des jeweiligen Lagers bestimmt werden. Insbesondere kann bei einer Erhöhung der Reibung des Lagers über ein vorgegebenes Maß hinaus, welches auf eine Schädigung des Lagers beziehungsweise einen erhöhten Verschleiß des Lagers schließen lässt, eine entsprechende Temperaturerhöhung betrachtet werden. Durch den Vergleich beziehungsweise eine Überwachung der Temperatur an allen Lagern des Drehverteilers kann nicht nur diese Bestimmung des Verschleißes eines Lagers noch zuverlässiger bestimmt werden, sondern es kann auch genau lokalisiert werden, welches Lager einen erhöhten Verschleiß aufweist.

Die Überwachungsvorrichtung kann weiterhin auch einen Akustikwandler, insbesondere ein Mikrofon, umfassen, mittels welchem die an dem Drehverteiler aufgebrachten Schwingungen aufgenommen werden. Besonders bevorzugt weist der Drehverteiler mindestens zwei Lager auf und an mindestens zwei Lagern oder an allen Lagern ist jeweils ein separater Akustikwandler vorgesehen.

So können die in den Lagern aufgebrachten Schwingungen entsprechend aufgenommen und überwacht werden, um auf diese Weise auf die mechanische Integrität des Drehverteilers und insbesondere auf die mechanische Integrität der jeweiligen Lager des Drehverteilers schließen zu können.

In einer bevorzugten Weiterbildung ist die Überwachungsvorrichtung dazu eingerichtet, Bewegungen eines stehenden Teils des Drehverteilers gegenüber dem stehenden Anlagenteil zu ermitteln, bevorzugt in axialer Richtung des Drehverteilers und/oder in radialer Richtung des Drehverteilers und/oder in Umfangsrichtung des Drehverteilers. Über das mechanische Verhalten lässt sich auf die mechanische Integrität rückschließen.

Die oben gestellte Aufgabe wird auch durch ein Verfahren mit den Merkmalen des Anspruchs 14 gelöst.

Entsprechend wird ein Verfahren zum Überwachen einer Vorrichtung zum Behandeln eines Behälters in einer Füllproduktabfüllanlage vorgeschlagen, bei welcher ein relativ zu einem stehenden Anlagenteil drehbares Behandlungskarussell und ein Drehverteiler zur Übergabe eines Mediums von dem stehenden Anlagenteil auf das Behandlungskarussell vorgesehen ist. Erfindungsgemäß wird die Bewegung eines stehenden Teils des Drehverteilers gegenüber dem stehenden Anlagenteil überwacht, wobei der stehende Teil des Drehverteilers über eine Kompensationsverrohrung elastisch mit dem stehenden Anlagenteil verbunden ist.

Vorzugsweise wird das von dem stehenden Teil des Drehverteilers auf den stehenden Anlagenteil aufgebrachte Drehmoment und/oder die Temperatur mindestens eines Lagers des Drehverteilers und/oder das akustische Verhalten mindestens eines Lagers des Drehverteilers überwacht.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Schnittdarstellung durch ein Behandlungskarussell einer Vorrichtung zum Behandeln eines Behälters, wobei ein Drehverteiler zur Übergabe eines Mediums von einem stehenden Anlagenteil auf das Behandlungskarussell vorgesehen ist,
- Figur 2: eine schematische perspektivische Darstellung eines Drehverteilers mit einer Überwachungsvorrichtung,
- Figur 3: eine schematische perspektivische Darstellung eines Drehverteilers in einer alternativen Ausführungsform, und
- Figur 4: eine schematische perspektivische Darstellung eines Drehverteilers in einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

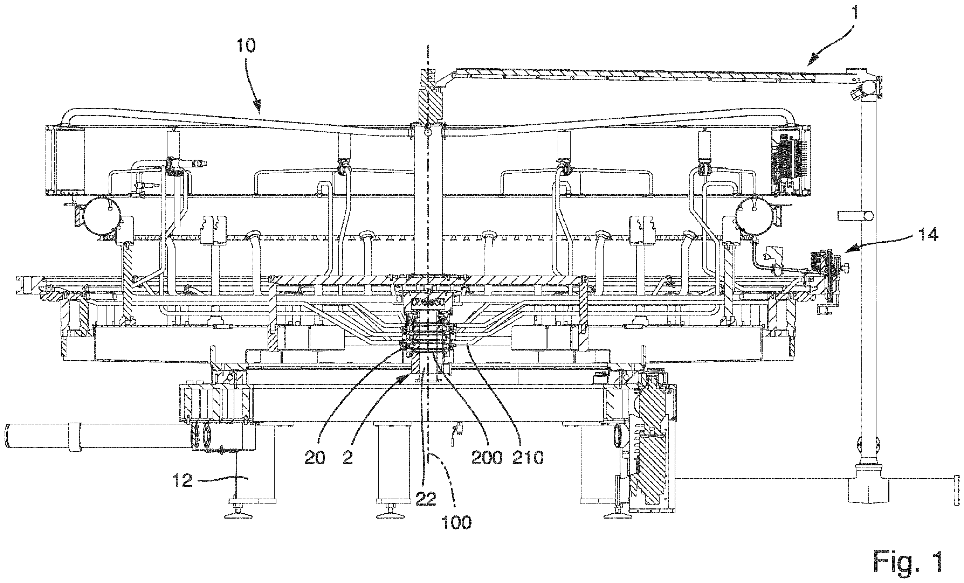

Figur 1 zeigt eine Vorrichtung 1 zum Behandeln eines hier nicht gezeigten Behälters in einer Füllproduktabfüllanlage. Bei der Vorrichtung 1 kann es sich beispielsweise um einen Füller einer Füllproduktabfüllanlage handeln, welcher zum Befüllen von zu befüllenden Behältern, beispielsweise Flaschen, ausgebildet ist.

Die Vorrichtung 1 umfasst ein Behandlungskarussell 10, das gegenüber einem stehenden Anlagenteil 12 um eine Rotationsachse 100 herum rotierbar ist. Die Verwendung eines Behandlungskarussells 10 ermöglicht es, in einer Behälterbehandlungsanlage, dem Behandlungskarussell 10 einen konstanten Strom an zu behandelnden Behältern zuzuführen, diese zu behandeln und dann die behandelten Behälter an einen nachfolgenden Behandlungsschritt oder eine nachfolgende Transportvorrichtung zu übergeben.

In dem hier gezeigten Ausführungsbeispiel handelt es sich bei der Vorrichtung 1 um einen Füller einer Füllproduktabfüllanlage, wobei das Behandlungskarussell 10 entsprechend Füllorgane 14 umfasst, welche am Umfang des Behandlungskarussells 10 angeordnet sind und welche dazu vorgesehen sind, in einem kontinuierlichen Prozess die zu behandelnden Behälter mit dem Füllprodukt zu befüllen.

Zur Übergabe von Medien - beispielsweise zur Übergabe des in die Behälter abzufüllenden Füllprodukts - von dem stehenden Anlageteil 12 auf das Behandlungskarussell 10, welches sich gegenüber dem stehenden Anlagenteil 12 im Betrieb dreht, ist ein Drehverteiler 2 vorgesehen. Der Drehverteiler 2 weist zumindest einen stehenden Teil 22, welcher mit dem stehenden Anlagenteil 12 verbunden ist, und einen drehenden Teil 20, welcher mit dem Behandlungskarussell 10 verbunden ist und mit diesem umläuft, auf.

In dem gezeigten Ausführungsbeispiel weist der Drehverteiler 2 eine im Behandlungsbetrieb zusammen mit dem Behandlungskarussell 10 umlaufende Hülse auf, welche über eine stationäre Verteilerwelle, welche mit dem stehenden Anlagenteil 12 verbunden ist, in Verbindung steht.

In der umlaufenden Hülse des Drehverteilers 2, die den drehenden Teil 20 des Drehverteilers 2 ausbildet, sind Verteilerspuren 200 vorgesehen, welche jeweils mit einer Medienverrohrung 210 verbunden sind, wobei die Medienverrohrung dazu dient, das aus der jeweiligen Verteilerspur 200 abgenommene Medium über die Medienverrohrung 210 innerhalb des Behandlungskarussells 10 an den jeweiligen gewünschten Ort zu transportieren. Beispielsweise kann mittels der Medienverrohrung 210 erreicht werden, dass Füllprodukt, Steuermedien oder Gas von der jeweiligen Verteilerspur 200 an die Füllorgane 14 übergeben werden.

Die Zufuhr der jeweiligen Medien in die Verteilerspuren 200 findet über entsprechende Axialbohrungen und Radialbohrungen in der Verteilerwelle statt, welche als der stehende Teil 22 des Drehverteilers 2 ausgebildet ist. Die Axialbohrungen und Radialbohrungen münden entsprechend in die Verteilerspuren 200 des als Hülse ausgebildeten drehenden Teils 20.

Die Verteilerspuren 200 sind in an sich bekannter Weise ausgebildet und sind mittels Dichtungen gegenüber der Umgebung und auch gegeneinander abgedichtet, derart, dass eine medienreine Führung der Medien in den Verteilerspuren 200, beziehungsweise eine medienreine Übergabe der jeweiligen Medien von der Verteilerwelle auf die Verteilerspur 200 in die als drehender Teil 20 ausgebildeten Hülse und dann in die Medienverrohrung 210 erreicht wird.

Der prinzipielle Aufbau einer solchen Vorrichtung 1 und insbesondere der prinzipielle Aufbau eines Behandlungskarussells 10 innerhalb eines Füllers, bei welchem Medien über einen Drehverteiler 2 von einem stehenden Anlagenteil 12 auf das im Betrieb rotierende Behandlungskarussell 10 übergeben werden, ist prinzipiell bekannt.

Es ist auch bekannt, den Aufbau eines Drehverteilers 2 in umgekehrter Reihenfolge vorzunehmen, nämlich mit stationärer Hülse und drehender Verteilerwelle. Die jeweilige Ausgestaltung und Anbindung des Drehverteilers 2 hängt von der Gestaltung der gesamten Anlage ab.

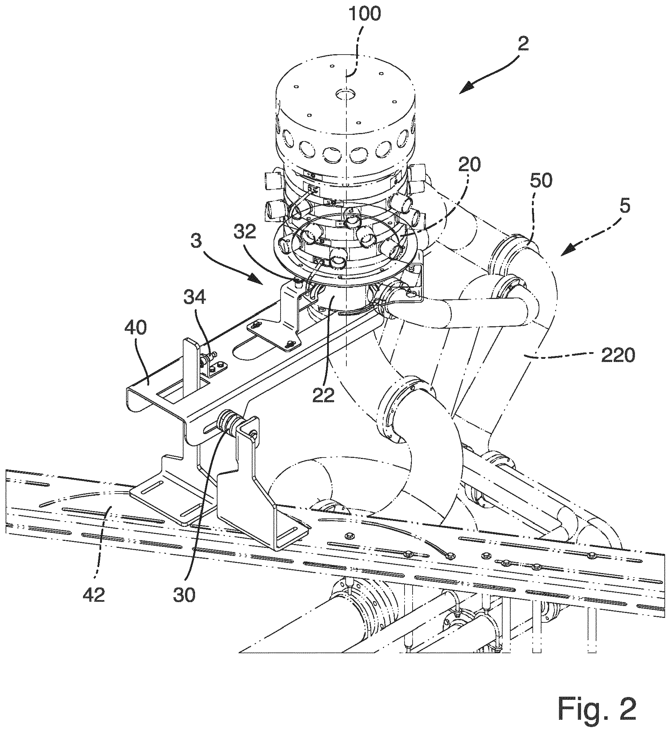

Um eine Überwachung der mechanischen Integrität des Drehverteilers 2 zu erreichen, wird der beispielsweise in Figur 2 gezeigte Aufbau des Drehverteilers 2 in Kombination mit einer Überwachungsvorrichtung 3 vorgeschlagen.

Mittels der Überwachungsvorrichtung 3 wird dabei das mechanische Verhalten des Drehverteilers 2 im Betrieb überwacht.

In dem in Figur 2 gezeigten Ausführungsbeispiel ist dazu die als stehender Teil 22 ausgebildete Verteilerwelle mit einem Messhebel 40 verbunden, wobei die auf die Verteilerwelle aufgebrachten Bewegungen entsprechend ebenfalls auf den Messhebel 40 übertragen werden. Eine Traverse 42, die auch als Drehmomentstütze ausgebildet sein kann, ist am stehenden Anlagenteil 12 befestigt, so dass eine Relativbewegung des an der Verteilerwelle angebrachten Messhebels 40 bezüglich der Traverse 42 bestimmt werden kann.

Hierzu ist in dem gezeigten Ausführungsbeispiel ein Kraftaufnehmer 30 vorgesehen, mittels welchem eine Rotation der Verteilerwelle um ihre Rotationsachse 100 herum überwacht werden kann. Auf diese Weise kann mittels des Kraftaufnehmers 30 das von der als drehendem Teil 20 ausgebildeten Hülse des Drehverteilers 2 auf die Verteilerwelle übertragene Drehmoment über die Messung der mittels des Messhebels 40 auf den Kraftaufnehmer 30 übertragenen Kraft bestimmt werden.

Eine Bewegung der Verteilerwelle bezüglich des stehenden Anlagenteils 12 wird einfacher ermöglicht und ist sensibler zu detektieren, wenn eine elastische Lagerung der Verteilerwelle vorgesehen ist.

Eine solche elastische Lagerung der Verteilerwelle wird in dem gezeigten Ausführungsbeispiel über eine entsprechende Kompensationsverrohrung 5 erreicht. Die Kompensationsverrohrung 5 bildet die jeweiligen Medienzuführungen 220 aus, mittels welchen die über den Drehverteiler 2 von dem stehenden Anlagenteil 12 auf den rotierenden Anlagenteil 10 zu übergebenen Medien dem Drehverteiler 2 und insbesondere der Verteilerwelle zugeführt werden.

Die Kompensationsverrohrung 5 weist beispielsweise die in Figur 2 gezeigten mehrfachen Abwinklungen und Knicke auf, die entsprechend in Winkeln zueinander angeordnete Teilabschnitte der Kompensationsverrohrung 5 ausbilden. Durch die Ausbildung der Kompensationsverrohrung 5 mit den zueinander unter einem Winkel angeordneten Teilabschnitten kann eine elastische Anbindung des stehenden Teils 22 des Drehverteilers 2 an dem stehenden Anlagenteil 12 erreicht werden.

Mit anderen Worten führt die Ausbildung der Teilabschnitte der Kompensationsverrohrung 5 in Winkeln zueinander dazu, dass eine auf die Kompensationsverrohrung 5 aufgebrachte Kraftkomponenten stets zumindest in einem Teilabschnitt im Wesentlichen quer zur Rohrrichtung wirkt, so dass zumindest die Querelastizität der jeweiligen Verrohrung zu einer elastischen Anbindung des stehenden Teils 22 des Drehverteilers 2 führt.

Dies kann dadurch unterstützt werden, dass in der Kompensationsverrohrung 5 beispielsweise an den Schnittstellen zwischen einzelnen Teilabschnitten elastische Kompensatoren 50 eingesetzt werden, welche ebenfalls dazu vorgesehen sind, eine Bewegung des stehenden Teils 22 elastisch zu ermöglichen. Die Kompensatoren 50 sind in so orientiert, dass sie eine scherenförmige Bewegung der einzelnen unter einem Winkel zueinander angeordneten Teilabschnitte der Kompensationsverrohrung 5 ermöglichen, so dass beispielsweise eine Auf- und Abwärtsbewegung des stehenden Teils 22 des Drehverteilers 2 und der entsprechend über die Kompensationsverrohrung 5 vorgesehenen Medienversorgung ermöglicht wird und gleichzeitig auch eine elastische Rotationsbewegung des stehenden Teils 22 erreicht wird.

Gleichzeitig bieten die Kompensatoren 50 jedoch eine elastische Rückstellkraft derart an, dass über den Messhebel 40 dann entsprechend über den Kraftaufnehmer 30 das von dem drehenden Teil 20 des Drehverteilers 2 auf den stehenden Teil 22 des Drehverteilers 2 übertragene Drehmoment bestimmt werden kann.

Ein weiterer Kraftsensor kann zur Überwachung der axialen Position des stehenden Teils 22 relativ zu dem stehenden Anlagenteil 12 vorgesehen sein, insbesondere in Form eines weiteren Kraftsensors 32.

Weitere Sensoren in Form von weiteren Kraftsensoren können ebenfalls vorgesehen sein, welche eine Bewegung des stehenden Teils 22 des Drehverteilers 2 relativ zur Traverse 42 und entsprechend relativ zum stehenden Anlagenteil 12 messen, um entsprechend den Rundlauf der Verteilerwelle bestimmen zu können. Ein entsprechender Rundlaufsensor, ebenfalls in Form eines Kraftsensors, ist durch den Kraftsensor 34 vorgegeben.

Auf diese Weise ist es möglich, eine genaue Überwachung sowohl des übertragenen Drehmoments als auch der Höhenposition als auch des Rundlaufs des Drehverteilers 2 zu messen und zu überprüfen.

Kommt es im Verlauf der Behandlung und insbesondere im Verlauf des Betriebs der Vorrichtung 1 und insbesondere bei der Rotation des drehenden Teils 20 in Form der Hülse gegenüber dem stehenden Teil 22 in Form der Drehverteilerachse zu einer Erhöhung beziehungsweise einer Verringerung des Drehmoments beziehungsweise zu einer Veränderung der Position des stehenden Teils 22 oder zu einer Veränderung des Rundlaufs, so kann dies über die beschriebenen Sensoren und damit über die beschriebene Überwachungsvorrichtung bestimmt werden.

Bei Überschreiten beziehungsweise Unterschreiten entsprechender vorgegebener Alarmschwellen beziehungsweise bei einem adaptiven System beim Überschreiten beziehungsweise Unterschreiten bestimmter Alarmbedingungen kann entsprechend auf eine Veränderung des Betriebszustands und damit auf die Notwendigkeit des Einleitens bestimmter Maßnahmen, wie beispielsweise dem Warten des Drehverteilers 2 bezüglich seiner Lager und/oder bezüglich seiner Dichtungen, ausgelöst werden. In Extremfällen kann auch ein sofortiges oder kontrolliertes Herabfahren der Anlage notwendig sein, um größere Schäden von der Anlage abzuwenden.

Mittels einer entsprechenden Auswertungsvorrichtung, in welche die Signale der Sensoren und insbesondere die Signale der Überwachungsvorrichtung 3 mit den Sensoren 30, 32, 34 eingehen, kann durch entsprechende Analyse der Werte, sowohl im Zeitverlauf als auch in Bezug auf den jeweiligen Anlagenzustand beziehungsweise dem jeweiligen Prozesszustand ermittelt werden, ob eine Alarmbedingung vorliegt.

Insbesondere ist dabei zu berücksichtigen, dass bei unterschiedlichen Produktionsbedingungen beziehungsweise unterschiedlichen Betriebsbedingungen, wie dem Anfahren der Anlage, bei welchem zunächst eine Haftreibung überwunden werden muss, beim Produzieren bei unterschiedlichen Temperaturen sowie im Reinigungsprozess genauso wie beim Abfahren der Anlage unterschiedliche Kräfte und Bedingungen auf den Drehverteiler 2 wirken. Eine Auswertungsvorrichtung kann die jeweils ermittelten Werte der Überwachungsvorrichtung 3 in Relation zu dem jeweiligen Betriebszustand der Vorrichtung setzen, um dann ermitteln zu können, ob eine Alarmbedingung vorliegt.

Eine Überwachungs- beziehungsweise Analysevorrichtung kann weiterhin eine Betrachtung der jeweils bestimmten Werte im Zeitverlauf vornehmen, um aus bestimmten Trends beziehungsweise Abweichungen der Messwerte, auch in Bezug auf den jeweiligen Anlagenzustand und Betriebszustand, das Erreichen einer Alarmbedingung entweder zu antizipieren beziehungsweise zu analysieren.

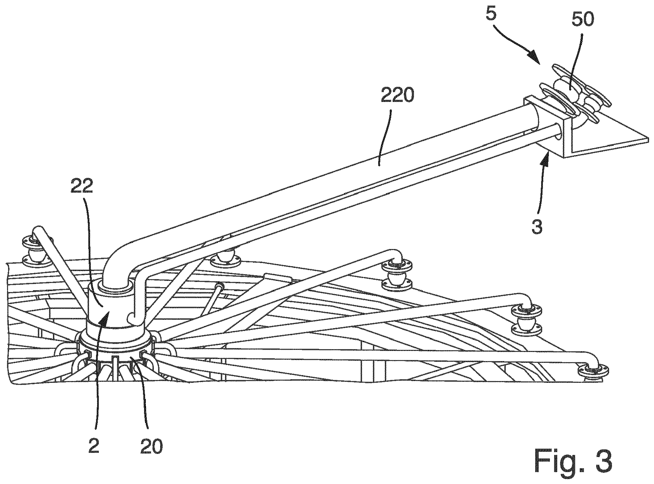

In Figur 3 ist eine weitere Ausbildung einer Vorrichtung 1 gezeigt, bei welcher mittels einer Medienzuführung 220, welche dem Drehverteiler 2 Medien zuführt, und wobei die Medienzuführung 220 über eine Kompensationsverrohrung 5 an den stehenden Anlagenteil angebunden ist, Medien an den Drehverteiler 2 übergeben werden. Eine Kompensationsverrohrung 5 umfasst wiederum einen Kompensator 50, welcher in Form einer Elastomerschelle ausgebildet ist, derart, dass die von der Verteilerwelle auf die Medienzuführung 220 übertragenen Drehmomente und Bewegungen zu einer entsprechenden Bewegung der Medienzuführung 220 führen können. Mittels einer entsprechenden Überwachungsvorrichtung 3, welche ebenfalls mittels Kraftaufnehmern arbeiten kann, kann entsprechend das von der Hülse des Drehverteilers 2 auf die Verteilerwelle übertragene Drehmoment mittels der Überwachungsvorrichtung 3 bestimmt werden.

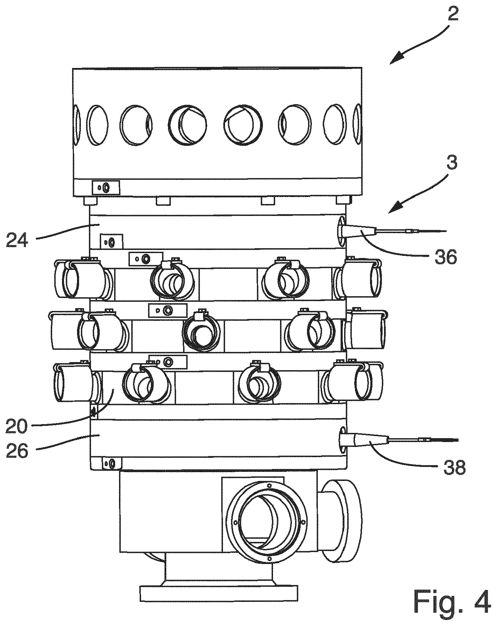

In Figur 4 ist in einer weiteren schematischen Darstellung ein Drehverteiler 2 gezeigt, wobei bei dem Drehverteiler 2 in dem gezeigten Ausführungsbeispiel der stehende Teil 22 in Form einer Hülse des Drehverteilers 2 dargestellt ist, und in der Hülse schematisch die Position der Lager 24, 26 des Drehverteilers 2 mittels der angedeuteten Ringe gezeigt ist.

Eine Überwachungsvorrichtung 3 ist in Form von Thermosensoren 36, 38 vorgesehen. Mittels der Thermosensoren 36, 38 kann die Temperatur des oberen Lagers 24 und/oder die Temperatur des unteren Lagers 26 bestimmt werden. Aus der Temperatur der Lager 24, 26 kann auf den jeweiligen Zustand der Lager 24, 26 geschlossen werden. Liegt eine Erhöhung der Lagerreibung vor, manifestiert sich dies auch in einer Erhöhung der Temperatur der Lager 24, 26, so dass bei einem Ansteigen der Temperatur der Lager auf den Verschleißzustand beziehungsweise einen mechanischen Defekt innerhalb des jeweiligen Lagers geschlossen werden kann.

Auch hier kann mittels einer Auswertungsvorrichtung aus dem Zeitverlauf beziehungsweise dem Verhalten der Temperatur der Lager, unter Berücksichtigung des jeweiligen Anlagenbeziehungsweise Betriebszustandes, auf den Zustand des jeweiligen Lagers geschlossen werden.

Bei der Berücksichtigung des Anlagenzustands und Betriebszustands ist es bei der Verwendung von Temperatursensoren von besonderer Bedeutung, die Abfülltemperatur, die Umgebungstemperatur und die Medientemperaturen zu berücksichtigen. Bei der Verwendung von mindestens zwei Thermosensoren 36, 38 kann dies jedoch auch dadurch kompensiert werden, dass lediglich die Differenz der Temperatur der beiden Thermosensoren 36, 38 berücksichtigt wird.

Anstelle der oder zusätzlich zu den Thermosensoren 36, 38 können in der gleichen Position auch Akustiksensoren vorgesehen sein, mittels welchen die von den Lagern 24, 26 emittierten Schwingungen bestimmt werden können. Auch hier kann aufgrund der emittierten Schwingungen, insbesondere deren Amplitude beziehungsweise deren Frequenz, in Relation zum jeweiligen Betriebszustand der Anlage auf die Integrität des Drehverteilers 2 und insbesondere auf die Integrität der Lager 24, 26 geschlossen werden.

Zur Analyse der akustischen Signale ist es besonders bevorzugt, innerhalb einer Auswertungsvorrichtung, beispielsweise mittels einer Fast Fourier Transformation, die entsprechenden Frequenzbereiche zu bestimmen, in welchen die Anlage und insbesondere die Lager 24, 26 Schwingungen emittiert, um dann über eine Veränderung im Zeitverlauf bestimmen zu können, ob sich hier Probleme ergeben.

### Bezugszeichenliste

- 1: Vorrichtung
- 10: Behandlungskarussell
- 12: stehender Anlagenteil
- 14: Füllorgan
- 100: Rotationsachse
- 2: Drehverteiler
- 20: drehender Teil
- 22: stehender Teil
- 24: Lager
- 26: Lager
- 200: Verteilerspur
- 210: Medienverrohrung
- 220: Medienzuführung
- 3: Überwachungsvorrichtung
- 30: Kraftaufnehmer
- 32: Kraftaufnehmer
- 34: Kraftaufnehmer
- 36: Thermosensor
- 38: Thermosensor
- 40: Messhebel
- 42: Drehmomentstütze
- 5: Kompensationsverrohrung
- 50: Kompensator

## Patentansprüche

1. Vorrichtung (1) zum Behandeln eines Behälters in einer Füllproduktabfüllanlage, bevorzugt zum Befüllen eines Behälters mit einem Füllprodukt in einer Füllproduktabfüllanlage, umfassend ein relativ zu einem stehenden Anlagenteil (12) drehbares Behandlungskarussell (10) und einen Drehverteiler (2) zur Übergabe eines Mediums von dem stehenden Anlagenteil (12) auf das Behandlungskarussell (10), und
eine Überwachungsvorrichtung (3), die zur Überwachung der mechanischen Integrität des Drehverteilers (2) bei drehendem Behandlungskarussell (10) eingerichtet ist,
**dadurch gekennzeichnet, dass**
ein stehender Teil (22) des Drehverteilers (2) über eine Kompensationsverrohrung (5) elastisch mit dem stehenden Anlagenteil (12) verbunden ist.

2. Vorrichtung (1) gemäß Anspruch 1, **dadurch gekennzeichnet, dass** die Überwachungsvorrichtung (3) dazu eingerichtet ist, das von einem drehenden Teil (20) des Drehverteilers (2) auf einen stehenden Teil (22) des Drehverteilers übertragene Drehmoment zu bestimmen und darüber die mechanische Integrität des Drehverteilers (2) zu überwachen.

3. Vorrichtung (1) gemäß Anspruch 1 oder 2, **dadurch gekennzeichnet, dass** die Überwachungsvorrichtung (3) eine Auswertungsvorrichtung umfasst, mittels welcher ein von der Überwachungsvorrichtung (3) ermittelter Parameter ausgewertet wird, bevorzugt bezüglich eines vorgegebenen Grenzwerts für den Parameter oder bezüglich eines Verhaltens des Parameters im Zeitverlauf.

4. Vorrichtung (1) gemäß einem der vorstehenden Ansprüche, **dadurch gekennzeichnet, dass** der stehende Teil (22) des Drehverteilers (2) über die Kompensationsverrohrung (5) elastisch über eine Anbindung mittels eines Elastomers mit dem stehenden Anlagenteil (12) verbunden ist.

5. Vorrichtung (1) gemäß einem der vorstehenden Ansprüche, **dadurch gekennzeichnet, dass** ein Sensor vorgesehen ist, der dazu eingerichtet ist, eine Bewegung des stehenden Teils (22) des Drehverteilers (2) bezüglich des stehenden Anlagenteils (12) zu ermitteln, wobei der Sensor bevorzugt ein Kraftaufnehmer (30), ein Beschleunigungsaufnehmer oder ein Wegsensor ist.

6. Vorrichtung (1) gemäß einem der vorstehenden Ansprüche, **dadurch gekennzeichnet, dass** die Kompensationsverrohrung (5) einen elastischen Kompensator, bevorzugt eine elastische Schelle, umfasst.

7. Vorrichtung (1) gemäß einem der vorstehenden Ansprüche, **dadurch gekennzeichnet, dass** die Kompensationsverrohrung (5) wenigstens zwei unter einem Winkel zueinander angeordnete Rohrabschnitte aufweist, welche relativ zueinander bewegbar sind und bevorzugt über einen rotierbaren Flansch aneinander angebunden sind.

8. Vorrichtung (1) gemäß einem der vorstehenden Ansprüche, **dadurch gekennzeichnet, dass** ein stehender Teil (22) des Drehverteilers (2) mit dem stehenden Anlagenteil (12) über eine Drehmomentstütze (42) verbunden ist und die Überwachungsvorrichtung (3) eine Bewegung des stehenden Teils (22) des Drehverteilers gegenüber der Drehmomentstütze (42) überwacht.

9. Vorrichtung (1) gemäß einem der vorstehenden Ansprüche, **dadurch gekennzeichnet, dass** die Überwachungsvorrichtung (3) einen Temperatursensor (36, 38) zur Überwachung der Temperatur eines Lagers (24, 26) des Drehverteilers (2) umfasst.

10. Vorrichtung (1) gemäß Anspruch 9, **dadurch gekennzeichnet, dass** der Drehverteiler (2) mindestens ein Lager (24, 26) und bevorzugt mindestens zwei Lager (24, 26) aufweist und ein Lager (24, 25) oder bevorzugt mindestens zwei Lager (24, 26) oder besonders bevorzugt alle Lager (24, 25) jeweils mit einem separaten Temperatursensor (36, 38) versehen sind.

11. Vorrichtung (1) gemäß einem der vorstehenden Ansprüche, **dadurch gekennzeichnet, dass** die Überwachungsvorrichtung (3) einen Akustikwandler umfasst, welcher die von einem Lager (24, 26) des Drehverteilers (2) emittierten Schwingungen aufnimmt.

12. Vorrichtung (1) gemäß Anspruch 11, **dadurch gekennzeichnet, dass** der Drehverteiler (2) mindestens ein Lager (24, 26) und bevorzugt mindestens zwei Lager (24, 26) aufweist und ein Lager (24, 26) oder bevorzugt mindestens zwei Lager (24, 25) oder besonders bevorzugt alle Lager (24, 26) jeweils mit einem separaten Akustikwandler versehen sind.

13. Vorrichtung (1) gemäß einem der vorstehenden Ansprüche, **dadurch gekennzeichnet, dass** die Überwachungsvorrichtung (3) dazu eingerichtet ist, Bewegungen eines stehenden Teils (22) des Drehverteilers (2) gegenüber dem stehenden Anlagenteil (12) zu ermitteln, bevorzugt in axialer Richtung des Drehverteilers (2) und/oder in radialer Richtung des Drehverteilers (2) und/oder in Umfangsrichtung des Drehverteilers (2).

14. Verfahren zum Überwachen einer Vorrichtung (1) zum Behandeln eines Behälters in einer Füllproduktabfüllanlage, bei welcher ein relativ zu einem stehenden Anlagenteil (12) drehbares Behandlungskarussell (10) und ein Drehverteiler (2) zur Übergabe eines Mediums von dem stehenden Anlagenteil (12) auf das Behandlungskarussell (10) vorgesehen ist,
**dadurch gekennzeichnet, dass**
die Bewegung eines stehenden Teils (22) des Drehverteilers (2) gegenüber dem stehenden Anlagenteil (12) überwacht wird, wobei der stehende Teil (22) des Drehverteilers (2) über eine Kompensationsverrohrung (5) elastisch mit dem stehenden Anlagenteil (12) verbunden ist.

15. Verfahren nach Anspruch 14, **dadurch gekennzeichnet, dass** das von dem stehenden Teil (22) des Drehverteilers auf den stehenden Anlagenteil (12) aufgebrachte Drehmoment und/oder die Temperatur mindestens eines Lagers (24, 26) des Drehverteilers (3) und/oder das akustische Verhalten mindestens eines Lagers (24, 26) des Drehverteilers (3) überwacht wird.

## Claims

1. An apparatus (1) for treating a container in a fill-product filling plant, preferably for filling a container with a fill product in a fill-product filling plant, comprising a treatment carousel (10), which can be rotated relative to a stationary plant part (12), and a rotary distributor (2) for transferring a medium from the stationary plant part (12) to the treatment carousel (10), and
a monitoring apparatus (3), which is configured to monitor the mechanical integrity of the rotary distributor (2) when the treatment carousel (10) is rotating,
**characterized in that**
a stationary part (22) of the rotary distributor (2) is resiliently connected to the stationary plant part (12) via a compensation pipework (5).

2. The apparatus (1) according to claim 1, **characterized in that** the monitoring apparatus (3) is configured to determine the torque transmitted from a rotating part (20) of the rotary distributor (2) to a stationary part (22) of the rotary distributor and to thereby monitor the mechanical integrity of the rotary distributor (2).

3. The apparatus (1) according to claim 1 or 2, **characterized in that** the monitoring apparatus (3) comprises an evaluation apparatus, by means of which a parameter determined by the monitoring apparatus (3) is evaluated, preferably with respect to a predetermined limit value for the parameter or with respect to a behavior of the parameter over time.

4. The apparatus (1) according to any of the preceding claims, **characterized in that** the stationary part (22) of the rotary distributor (2) is resiliently connected to the stationary plant part (12) via the compensation pipework (5) via a connection by means of an elastomer.

5. The apparatus (1) according to any of the preceding claims, **characterized in that** a sensor is provided which is configured to determine a movement of the stationary part (22) of the rotary distributor (2) with respect to the stationary plant part (12), wherein the sensor is preferably a force transducer (30), an accelerometer, or a displacement sensor.

6. The apparatus (1) according to any of the preceding claims, **characterized in that** the compensation pipework (5) comprises a resilient expansion joint, preferably a resilient clamp.

7. The apparatus (1) according to any of the preceding claims, **characterized in that** the compensation pipework (5) has at least two pipe portions arranged at an angle to one another, which can be moved relative to one another and are preferably connected to one another via a rotatable flange.

8. The apparatus (1) according to any of the preceding claims, **characterized in that** a stationary part (22) of the rotary distributor (2) is connected to the stationary plant part (12) via a torque bracket (42), and the monitoring apparatus (3) monitors a movement of the stationary part (22) of the rotary distributor relative to the torque bracket (42).

9. The apparatus (1) according to any of the preceding claims, **characterized in that** the monitoring apparatus (3) comprises a temperature sensor (36, 38) for monitoring the temperature of a bearing (24, 26) of the rotary distributor (2).

10. The apparatus (1) according to claim 9, **characterized in that** the rotary distributor (2) has at least one bearing (24, 26) and preferably at least two bearings (24, 26), and one bearing (24, 25) or preferably at least two bearings (24, 26) or particularly preferably all bearings (24, 25) are each provided with a separate temperature sensor (36, 38).

11. The apparatus (1) according to any of the preceding claims, **characterized in that** the monitoring apparatus (3) comprises an acoustic transducer which picks up the vibrations emitted by a bearing (24, 26) of the rotary distributor (2).

12. The apparatus (1) according to claim 11, **characterized in that** the rotary distributor (2) has at least one bearing (24, 26) and preferably at least two bearings (24, 26), and one bearing (24, 26) or preferably at least two bearings (24, 25) or particularly preferably all bearings (24, 26) are each provided with a separate acoustic transducer.

13. The apparatus (1) according to any of the preceding claims, **characterized in that** the monitoring apparatus (3) is configured to determine movements of a stationary part (22) of the rotary distributor (2) relative to the stationary plant part (12), preferably in the axial direction of the rotary distributor (2) and/or in the radial direction of the rotary distributor (2) and/or in the circumferential direction of the rotary distributor (2).

14. A method for monitoring an apparatus (1) for treating a container in a fill-product filling plant, in which a treatment carousel (10) is provided that can be rotated relative to a stationary plant part (12) and a rotary distributor (2) is provided for transferring a medium from the stationary plant part (12) to the treatment carousel (10),
**characterized in that**
the movement of a stationary part (22) of the rotary distributor (2) is monitored with respect to the stationary plant part (12), wherein the stationary part (22) of the rotary distributor (2) is resiliently connected to the stationary plant part (12) via compensation pipework (5).

15. The method according to claim 14, **characterized in that** the torque applied by the stationary part (22) of the rotary distributor to the stationary plant part (12) and/or the temperature of at least one bearing (24, 26) of the rotary distributor (2) and/or the acoustic behavior of at least one bearing (24, 26) of the rotary distributor (2) is monitored.

## Revendications

1. Dispositif (1) pour le traitement d'un récipient dans une installation de remplissage de produit de remplissage, de préférence pour le remplissage d'un récipient avec un produit de remplissage dans une installation de remplissage de produit de remplissage, comprenant un carrousel de traitement (10) rotatif par rapport à une partie d'installation fixe (12) et un distributeur rotatif (2) pour le transfert d'un milieu de la partie d'installation fixe (12) sur le carrousel de traitement (10), et
un dispositif de surveillance (3), qui est conçu pour la surveillance de l'intégrité mécanique du distributeur rotatif (2) lorsque le carrousel de traitement (10) tourne,
**caractérisé en ce que**
une partie fixe (22) du distributeur rotatif (2) est relié par l'intermédiaire d'un tuyau de compensation (5) élastiquement à la partie d'installation fixe (12).

2. Dispositif (1) selon la revendication 1, **caractérisé en ce que** le dispositif de surveillance (3) est conçu pour déterminer le couple transmis d'une partie rotative (20) du distributeur rotatif (2) à une partie fixe (22) du distributeur rotatif et également pour surveiller l'intégrité mécanique du distributeur rotatif (2).

3. Dispositif (1) selon la revendication 1 ou 2, **caractérisé en ce que** le dispositif de surveillance (3) comprend un dispositif d'évaluation, à l'aide duquel un paramètre déterminé par le dispositif de surveillance (3) est évalué, de préférence par rapport à une valeur limite prédéfinie pour le paramètre ou par rapport à un comportement du paramètre au fil du temps.

4. Dispositif (1) selon l'une des revendications précédentes,
**caractérisé en ce que** la partie fixe (22) du distributeur rotatif (2) est reliée par l'intermédiaire du tuyau de compensation (5) élastiquement par l'intermédiaire d'une liaison à l'aide d'un élastomère à la partie d'installation fixe (12).

5. Dispositif (1) selon l'une des revendications précédentes,
**caractérisé en ce qu'**un capteur est prévu, qui est conçu pour déterminer un mouvement de la partie fixe (22) du distributeur rotatif (2) par rapport à la partie d'installation fixe (12), dans lequel le capteur est de préférence un capteur de force (30), un capteur d'accélération ou un capteur de déplacement.

6. Dispositif (1) selon l'une des revendications précédentes,
**caractérisé en ce que** le tuyau de compensation (5) comprend un compensateur élastique, de préférence un collier élastique.

7. Dispositif (1) selon l'une des revendications précédentes,
**caractérisé en ce que** le tuyau de compensation (5) présente au moins deux sections de tuyau agencées selon un angle l'une par rapport à l'autre, lesquelles sont mobiles l'une par rapport à l'autre et de préférence sont reliées l'une à l'autre par l'intermédiaire d'une bride rotative.

8. Dispositif (1) selon l'une des revendications précédentes,
**caractérisé en ce qu'**une partie fixe (22) du distributeur rotatif (2) est reliée à la partie d'installation fixe (12) par l'intermédiaire d'un support de couple (42) et le dispositif de surveillance (3) surveille un mouvement de la partie fixe (22) du distributeur rotatif par rapport au support de couple (42).

9. Dispositif (1) selon l'une des revendications précédentes,
**caractérisé en ce que** le dispositif de surveillance (3) comprend un capteur de température (36, 38) pour la surveillance de la température d'un palier (24, 26) du distributeur rotatif (2).

10. Dispositif (1) selon la revendication 9, **caractérisé en ce que** le distributeur rotatif (2) présente au moins un palier (24, 26) et de préférence au moins deux paliers (24, 26) et un palier (24, 25) ou de préférence au moins deux paliers (24, 26) ou de manière particulièrement préférée tous les paliers (24, 25) sont respectivement munis d'un capteur de température (36, 38) séparé.

11. Dispositif (1) selon l'une des revendications précédentes,
**caractérisé en ce que** le dispositif de surveillance (3) comprend un transducteur acoustique, lequel absorbe les vibrations émise par un palier (24, 26) du distributeur rotatif (2).

12. Dispositif (1) selon la revendication 11, **caractérisé en ce que** le distributeur rotatif (2) présente au moins un palier (24, 26) et de préférence au moins deux paliers (24, 26) et un palier (24, 26) ou de préférence au moins deux paliers (24, 25) ou de manière particulièrement préférée tous les paliers (24, 26) sont respectivement munis d'un transducteur acoustique séparé.

13. Dispositif (1) selon l'une des revendications précédentes,
**caractérisé en ce que** le dispositif de surveillance (3) est conçu pour déterminer des mouvements d'une partie fixe (22) du distributeur rotatif (2) par rapport à la partie d'installation fixe (12), de préférence dans la direction axiale du distributeur rotatif (2) et/ou dans la direction radiale du distributeur rotatif (2) et/ou dans la direction périphérique du distributeur rotatif (2).

14. Procédé pour la surveillance d'un dispositif (1) pour le traitement d'un récipient dans une installation de remplissage de produit de remplissage, dans lequel un carrousel de traitement (10) rotatif par rapport à une partie d'installation fixe (12) et un distributeur rotatif (2) pour le transfert d'un milieu de la partie d'installation fixe (12) sur le carrousel de traitement (10) est prévu,
**caractérisé en ce que**
le mouvement d'une partie fixe (22) du distributeur rotatif (2) est surveillé par rapport à la partie d'installation fixe (12), dans lequel la partie fixe (22) du distributeur rotatif (2) est reliée par l'intermédiaire d'un tuyau de compensation (5) élastiquement à la partie d'installation fixe (12).

15. Procédé selon la revendication 14, **caractérisé en ce que** le couple appliqué par la partie fixe (22) du distributeur rotatif sur la partie d'installation fixe (12) et/ou la température d'au moins un palier (24, 26) du distributeur rotatif (2) et/ou le comportement acoustique d'au moins un palier (24, 26) du distributeur rotatif (2) sont surveillés.
